(19) **Europäisches Patentamt / European Patent Office / Office européen des brevets**

(11) **EP 4 651 355 A1**

(12) **EUROPEAN PATENT APPLICATION**
published in accordance with Art. 153(4) EPC

(43) Date of publication:
**19.11.2025 Bulletin 2025/47**

(21) Application number: **23915549.2**

(22) Date of filing: **14.07.2023**

(51) International Patent Classification (IPC):
***H02M 3/158*** (2006.01)

(52) Cooperative Patent Classification (CPC):
Y02B 70/10

(86) International application number:
**PCT/CN2023/107497**

(87) International publication number:
**WO 2024/148787 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.01.2023 CN 202310064333**

(71) Applicant: **Acepower and Technologies Co., Ltd Shanghai 201206 (CN)**

(72) Inventor: **WANG, Yuetian Shanghai 201206 (CN)**

(74) Representative: **2SPL Patentanwälte PartG mbB Landaubogen 3 81373 München (DE)**

(54) **STEP-DOWN CIRCUIT, STEP-DOWN CIRCUIT CONTROL METHOD AND APPARATUS, AND SYSTEM**

(57) Embodiments of the present application provide a buck circuit, a buck circuit control method, device and system. The buck circuit comprises: a main switching element and an inductor that are connected at a voltage input end and a voltage output end, wherein resonant elements are disposed in series between the main switching element and the inductor, the resonant elements and the inductor are further provided with auxiliary switching elements in parallel, the inductor is provided in parallel with a switching tube, one end of the switching tube is grounded, and the other end of the switching tube is connected between the resonant element and the inductor, wherein an on-off state of the auxiliary switching element is opposite to that of the main switching element. The present application can achieve a larger proportion of buck effect.

FIG. 1

**Description**

TECHNICAL FIELD

The present application relates to the field of circuit topology, in particular to a buck circuit, a buck circuit control method, device and system.

BACKGROUND

In electronic circuits, power supplies are generally divided into two categories, one is a linear power supply, and the other is a switching power supply. The linear power supply has the advantage of low noise. Although the switching power supply is noisy, it has advantages of high efficiency and low heat loss. The switching power supply can also be subdivided into a buck type, a boost type and a boost-buck type. In the field of consumer electronics such as mobile phones, computers or the like, a buck circuit is widely used. Among them, the basic buck circuit is composed of a switch, an inductor, a diode and a capacitor.

It is known to those skilled in the art that, in application scenarios of low voltage and high current output, the buck circuit operates in a current continuous mode, and has a characteristic that the output voltage is determined by the input voltage and the duty cycle of the main switch tube (that is, the ratio of the on-time of the switch tube to the working cycle), that is, $V_o = D \times V_{in}$, where $V_o$ denotes an output voltage, $V_{in}$ denotes an input voltage, $D$ denotes a duty cycle of the main switch tube.

SUMMARY

Aiming at the problems in the prior art, the present application provides a buck circuit, a buck circuit control method, device and system, which can achieve a larger proportion of buck effect.

In order to solve the above technical problems, the present application provides the following technical solutions: In a first aspect, the present application provides a buck circuit, comprising:
a main switching element and an inductor that are connected at a voltage input end and a voltage output end, wherein resonant elements are disposed in series between the main switching element and the inductor, the resonant elements and the inductor are further provided with auxiliary switching elements in parallel, the inductor is provided in parallel with a switching tube, one end of the switching tube is grounded, and the other end of the switching tube is connected between the resonant element and the inductor, wherein an on-off state of the auxiliary switching element is opposite to that of the main switching element.

Further, the resonant element consists of at least one resonant capacitor and at least one resonant inductor connected in series.

Further, the voltage output end is provided in parallel with a constant voltage load.

Further, the main switching element and the auxiliary switching element are semiconductor power tubes, a source electrode of the main switching element is connected to a drain electrode of the auxiliary switching element, a drain electrode of the main switching element is connected to the voltage input end, and a source electrode of the auxiliary switching element is connected to the voltage output end.

Further, the semiconductor power tube is any of a metal oxide semiconductor field effect transistor of silicon, a metal oxide semiconductor field effect transistor of silicon carbide, or a gallium nitride power device.

In a second aspect, the present application provides a buck circuit control method, comprising:

controlling, at a first time, a main switching element to be in an on state and an auxiliary switching element to be in an off state, so that the main switching element is turned on at zero voltage;
controlling, at a second time, the auxiliary switching element to be in an on state and the main switching element to be in an off state, so that a resonant capacitor and a resonant inductor in a resonant element generate resonance.

Further, prior to the controlling, at a second time, the auxiliary switching element to be in an on state and the main switching element to be in an off state, the method comprises:
controlling the main switching element and the auxiliary switching element to be both in an off state such that circuit current flowing through the inductor discharges an output capacitor of the auxiliary switching element until a body diode of the auxiliary switching element is turned on and the auxiliary switching element is enabled meet the condition of being turned on at zero voltage.

Further, posterior to the controlling, at a second time, the auxiliary switching element to be in an on state and the main switching element to be in an off state, the method comprises:
controlling the main switching element and the auxiliary switching element to be both in an off state such that the circuit current flowing through the inductor discharges an output capacitor of the main switching element until a body diode of the main switching element is turned on and the main switching element is enabled meet the condition of being turned on at zero voltage.

In a third aspect, the present application provides a buck circuit control device, comprising:

a first switch control module for controlling, at a first time, a main switching element to be in an on state and an auxiliary switching element to be in an off state, so that the main switching element is turned on at zero voltage;

a second switch control module for controlling, at a second time, the auxiliary switching element to be in an on state and the main switching element to be in an off state, so that a resonant capacitor and a resonant inductor in a resonant element generate resonance.

In a fourth aspect, the present application provides a buck circuit control system comprising a buck circuit and a buck circuit control device as described above, wherein the buck circuit control device is in signal connection with the main switching element and the auxiliary switching element in the buck circuit.

As can be seen from the above technical scheme, the present application provides a buck circuit, a buck circuit control method, device and system, in which a main switching element and an inductor are connected at a voltage input end and a voltage output end, resonant elements are disposed in series between the main switching element and the inductor, the resonant elements and the inductor are further provided with auxiliary switching elements in parallel, wherein an on-off state of the auxiliary switching element is opposite to that of the main switching element, thereby a larger proportion of buck transformation can be achieved by adjusting the duty cycle of the main switching element to control the output voltage.

## BRIEF DESCRIPTION OF DRAWINGS

To illustrate more clearly the embodiments of the present application or the technical schemes of the prior art, a brief description of the accompanying drawings in the embodiments or the prior art will be given below. Obviously, the accompanying drawings described below are some embodiments described in this application. For those of ordinary skill in the art, other drawings can also be obtained without any creative labor from these drawings.

FIG. 1 is a structural schematic diagram of the buck circuit according to the present application;

FIG. 2 is a structural schematic diagram of the buck circuit in the prior art;

FIG. 3 is one of the state schematic diagrams of the buck circuit in a specific embodiment of the application at each time;

FIG. 4 is another of the state schematic diagrams of the buck circuit in a specific embodiment of the application at each time;

FIG. 5 is a structural schematic diagram of the buck circuit control device in a specific embodiment of the application.

## DETAILED DESCRIPTION

In order to make those skilled in the art better understand the solutions in the present application, the technical solutions in the embodiments of the present application will be clearly and completely described in the following with reference to the accompanying drawings in the embodiments of the present application. Obviously, the described embodiments are only a part of the embodiments of the present application, but not all of them. Any other embodiment obtained by those skilled in the art based on the embodiments of the present application without paying any creative labor should fall within the protection scope of the present application.

It should be noted that the terms "first," "second" and the like in the specification and claims in the present application and in the above-mentioned drawings are used to distinguish between similar objects and are not necessarily used to describe a particular order or precedence. It should be understood that the data thus used are interchangeable where appropriate for the purposes of the embodiments of this application described herein. Furthermore, the terms "comprising" and "having" and any variations thereof are intended to cover non-exclusive inclusions, such as, for example, a process, a method, a system, a product or a device comprising a series of steps or units need not to be limited to those steps or units that are clearly listed, but may include other steps or units that are not explicitly listed or inherent to these processes, methods, products or devices.

In the present application, the terms "up", "down", "left", "right", "front", "rear", "top", "bottom", "inside", "outside", "middle", "vertical", "horizontal", "transverse", "longitudinal" and the like indicate a location or position relationship based on the location or position relationship shown in the drawings. These terms are intended primarily to better describe the present application and its embodiments and are not intended to specify that the indicated device, element or component must have a particular orientation or be constructed and operated in a particular orientation.

In addition, some of the above terms may be used to indicate other meanings in addition to orientation or position relationship, for example, the term "up" may also be used in some cases to indicate a dependency or connection relationship. For those ordinarily skilled in the art, the specific meaning of these terms in this application may be understood on a case-by-case basis.

In addition, the terms "installation" "setup", "provided", "connected", "connected", "sleeved" should be understood broadly. For example, it may be fixed connection, detachable connection, or integrated construction; it may be mechanical connection, or electrical connection; it may be direct connection, or indirect connection through an intermediary, or it may be internal communication between two devices, elements or components. For those ordinarily skilled in the art, the specific meaning of the terms in this application may be understood on a case-by-case basis.

It should be noted that the embodiments in the present application and the features in the embodiments can be combined with each other without conflict. The present application is described in detail below with reference to the attached drawings and in conjunction with the embodiments.

Based on the relationship between input and output voltages in the existing scheme, when a large proportion of buck transformation is needed, the duty cycle *D* of the main switch will become very small, which increases the difficulty of implementation on the one hand and greatly reduces the conversion efficiency on the other hand.

In order to solve the above problems, the solution in the prior art is to achieve a large proportion of buck transformation through two-stage or even multi-stage transformation. However, there are still problems in the technical solution of the prior art: on the one hand, the cost is increased, and on the other hand, the multi-stage transformation reduces the overall energy conversion efficiency.

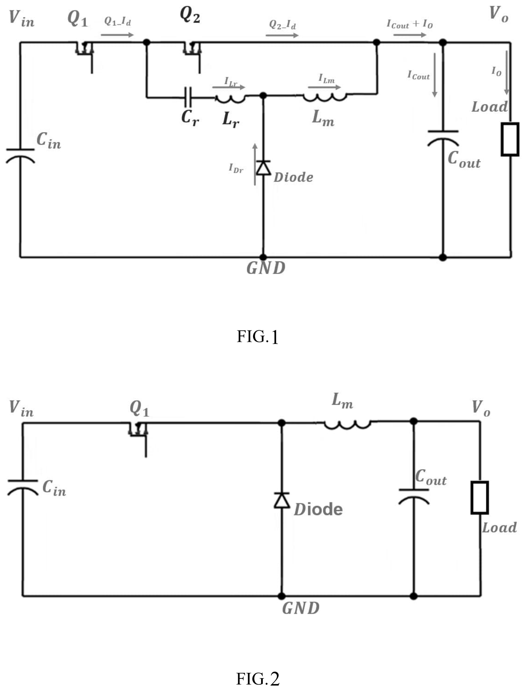

In view of the prior art in which a large proportion of buck transformation is realized through two-stage or even multi-stage transformation, but there are still problems such as increase of the cost and reduction of the overall energy conversion efficiency by the multi-stage transformation, in order to achieve a larger proportion of buck effect, the present application provides embodiments of a buck circuit, a buck circuit control method, device and system. Referring to FIG. 1, in the embodiment, the buck circuit specifically comprises: a main switching element and an inductor that are connected at a voltage input end and a voltage output end, wherein resonant elements are disposed in series between the main switching element and the inductor, the resonant elements and the inductor are further provided with auxiliary switching elements in parallel, the inductor is provided in parallel with a switching tube, one end of the switching tube is grounded, and the other end thereof is connected between a resonant cavity and the inductor Lm, wherein an on-off state of the auxiliary switching element is opposite to that of the main switching element.

In some embodiments, the switch tube is used for continuous flow, that is, to change the current path when the auxiliary switching element is turned on. The switch tube may be a diode, the anode of the diode is grounded, and the cathode of the diode is connected between the resonant element and the inductor Lm.

In another embodiment of the present application, the switch tube may also adopt a synchronous rectifier tube.

In some embodiments, the resonant element consists of at least one resonant capacitor and at least one resonant inductor connected in series.

Specifically, referring to the buck circuit in the prior art shown in FIG. 2, in the present application, an auxiliary switching element Q2 and a resonant cavity composed of a resonant capacitor Cr and a resonant inductor Lr are added on the basis of the prior art.

Alternatively, the resonant element in the present application can be a resonant cavity composed of a resonant capacitor Cr and a resonant inductor Lr. The resonant cavity is used for interconversion between the electric field energy in the capacitor and the magnetic field energy in the inductor.

In some embodiments, the voltage output end is provided in parallel with a constant voltage load.

In some embodiments, the main switching element and the auxiliary switching element are semiconductor power tubes, a source electrode of the main switching element is connected to a drain electrode of the auxiliary switching element, a drain electrode of the main switching element is connected to the voltage input end, and a source electrode of the auxiliary switching element is connected to the voltage output end.

Alternatively, the semiconductor power tube is any of a metal oxide semiconductor field effect transistor of silicon, a metal oxide semiconductor field effect transistor of silicon carbide, or a gallium nitride power device.

As can be seen from the above description, according to the buck circuit provided in the embodiment of the present application, a main switching element and an inductor are connected at a voltage input end and a voltage output end, resonant elements are disposed in series between the main switching element and the inductor, the resonant elements and the inductor are further provided with auxiliary switching elements in parallel, wherein an on-off state of the auxiliary switching element is opposite to that of the main switching element, thereby a larger proportion of buck transformation can be achieved by adjusting the duty cycle of the main switching element to control the output voltage.

In order to achieve a larger proportion of buck effect, the present application provides an embodiment of a buck circuit control method, comprising:

a step S101 of controlling, at a first time, a main switching element to be in an on state and an auxiliary switching element to be in an off state, so that the main switching element is turned on at zero voltage, and the resonant element resonates with the inductor.

Alternatively, the buck circuit control method of the present application controls the main switching element Q1 to be turned on at the first time t0, at this time, the current of the inductor Lm is negative, and the body diode of the main switching element Q1 is in an on state, so the main switching element Q1 is turned on at zero voltage (i.e. ZVS on).

During a dead zone after the first time t0, and between the first time t0 and the time t1, the auxiliary switching element Q2 is in an off state, at this time, the current flowing through the resonant inductor Lr and the inductor Lm is the same, and the current flowing through the resonant inductor Lr and the inductor Lm also flows through the load resistor and the output capacitor, then:

$$I_{Lr}(t) = I_{Lm}(t) = I_{Lm\_t0} + \frac{V_{in} - V_{Cr} - V_o}{L_m + L_r} \times t$$
$$\approx I_{Lm\_t0} + \frac{V_{in} - V_{Cr} - V_o}{L_m} \times t$$

<div align="right">equation (1)</div>

at this time, the Vcr voltage fluctuation is very small and can be approximately equivalent to a constant voltage, so during the period of t0 to t1, $I_{Lr}(t)$ and $I_{Lm}(t)$ increase approximately linearly.

A step S102 of controlling, at a second time, the auxiliary switching element to be in an on state and the main switching element to be in an off state, so that a resonant capacitor and a resonant inductor in a resonant element generate resonance.

Alternatively, the buck circuit control method of the present application controls the main switching element Q1 to be turned off at the second time t2, at this time, the auxiliary switching element Q2 is in the zero-voltage on-state, and the current of the capacitor Lm decreases linearly during this period, and then:

$$I_{Lm}(t) = I_M - \frac{V_{Cr}}{L_m + L_r} \times t \approx I_M - \frac{V_{Cr}}{L_m + L_r} \times t \qquad \text{equation (2)}$$

during this period, the current of the inductor Lm linearly decreases, the resonant inductor Lr resonates with the resonant capacitor Cr, and the current difference between the resonant inductor Lr and the inductor Lm flows through the load resistor and the output capacitor as well as the rectifying diode.

It is known from the volt-second balance of the inductor Lm that,

$$\frac{V_{in} - V_{Cr} - V_o}{L_m} * t_{on} = \frac{V_{Cr}}{L_m} * t_{off} \qquad \text{equation (3)}$$

The ripple voltage on the resonant capacitor Cr is very low, and the voltage thereof is approximately equal to the output voltage:

$$V_o \approx V_{Cr} \qquad \text{equation (4)}$$

Therefore, the duty cycle of the main switching element is as follows:

$$D = \frac{t_{on}}{t_{on} + t_{off}} \qquad \text{equation (5)}$$

The relationship between the input voltage and the output voltage can be obtained from the above equation as follows:

$$V_o = \frac{D}{1+D} V_{in} \qquad \text{equation (6)}$$

The relationship between the input voltage and the output voltage of the traditional buck circuit is as follows:

$$V_o = D \times V_{in} \qquad \text{equation (7)}$$

Therefore, when the duty cycle is 50%, the output voltage of the topology of the present application is 1/3 of the input voltage, while the output voltage of the traditional buck circuit is only 1/2 of the input voltage. Therefore, the buck circuit topology of the present application can realize a larger proportion of buck transformation.

It can be seen from the above content that in the control method of the present application, in accordance with the equation (6), a larger proportion of buck transformation can be achieved by adjusting the duty cycle of the main switching element to control the output voltage.

In some embodiments, prior to the controlling, at a second time, the auxiliary switching element to be in an on state and the main switching element to be in an off state, the method comprises:

controlling the main switching element and the auxiliary switching element to be both in an off state such that circuit current flowing through the inductor discharges an output capacitor of the auxiliary switching element until a body diode of the auxiliary switching element is turned on and the auxiliary switching element is enabled meet the condition of being turned on at zero voltage.

Alternatively, at the time t1 posterior to the time t0, the present application can control the main switching element Q1 and the auxiliary switching element Q2 to be both in an off state, at this time the circuit current $I_M$ flowing through the inductor Lm charges the output capacitor Coss of the main switching element Q1 and discharges the output capacitor Coss of the auxiliary switching element Q2 until the body diode of the auxiliary switching element Q2 is turned on, at that time, the auxiliary switching element Q2 meets the condition of ZVS on. Therefore at the second time t2, the auxiliary switching element Q2 is turned on at zero voltage.

In some embodiments, posterior to the controlling, at a second time, the auxiliary switching element to be in an on state and the main switching element to be in an off state, the method comprises:

controlling the main switching element and the auxiliary switching element to be both in an off state such that the circuit current flowing through the inductor discharges an output capacitor of the main switching element until a body diode of the main switching element is turned on and the main switching element is enabled meet the condition of being turned on at zero voltage.

Alternatively, at the time t3 posterior to the time t2, the present application can control the main switching element Q1 and the auxiliary switching element Q2 to be both in an off state, at this time the current flowing through the inductor Lm is negative, thus the circuit current $I_{min}$ flowing through the inductor Lm charges the output capacitor Coss of the auxiliary switching element Q2 and discharges the output capacitor Coss of the main switching element Q1 until the body diode of the main switching element Q1 is turned on, at that time, the main switching element Q1 meets the condition of ZVS on. Therefore, at the subsequent time t4, the main switching element Q1 is turned on at zero voltage to start the next on-off cycle.

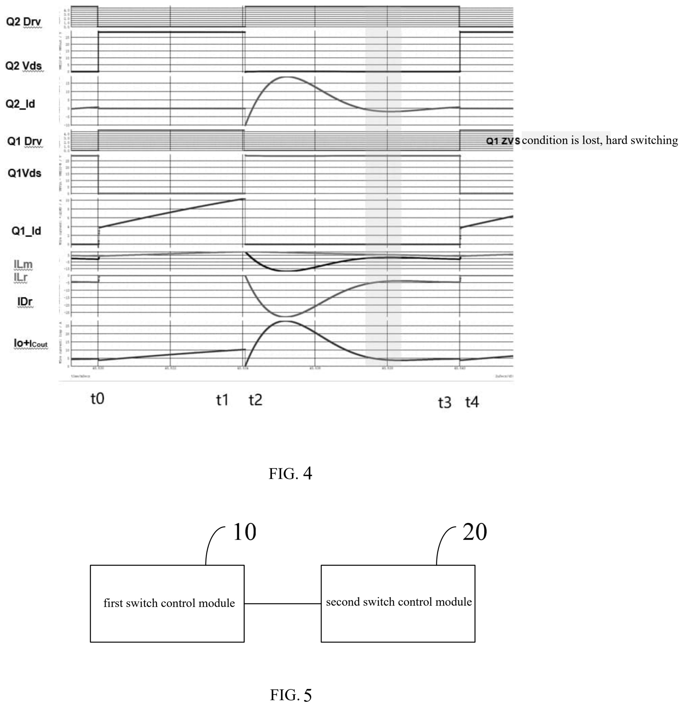

As in the above analysis, both the main switching element Q1 and the auxiliary switching element Q2 can be turned on at zero voltage, and the switching loss is greatly reduced. However, the characteristic that both the main switching element Q1 and the auxiliary switching element Q2 can be turned on at zero voltage can be realized only in the case of light load. As shown in FIG. 4, when the load increases to a certain extent, the condition of being turned on at zero voltage of the main switching element Q1 will be lost, but the condition of being turned on at zero voltage of the auxiliary switching element Q2 will always be maintained.

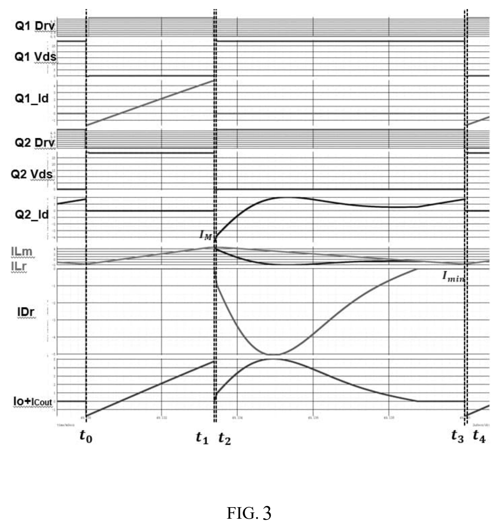

In addition, it can be seen from FIG. 3 that when the main switching element Q1 and the auxiliary switching element Q2 are turned off, the current is relatively small, which is conducive to reducing the switching loss and suitable for high-frequency switch design. The waveform of the current flowing through the auxiliary switching element Q2 and the one-way turn-on diode is close to sine wave, and the current effective value is low, which helps to reduce the on-loss.

Referring to FIG. 5, the present application further provides an embodiment of a buck circuit control device, comprising:

a first switch control module 10 for controlling, at a first time, a main switching element to be in an on state and an auxiliary switching element to be in an off state, so that the main switching element is turned on at zero voltage;
a second switch control module 20 for controlling, at a second time, the auxiliary switching element to be in an on state and the main switching element to be in an off state, so that a resonant capacitor and a resonant inductor in a resonant element generate resonance.

It can be seen from the above description, according to the buck circuit control device provided in the embodiment of the present application, a larger proportion of buck transformation can be achieved by adjusting the duty cycle of the main switching element to control the output voltage.

In another aspect, the present application further provides an embodiment of a buck circuit control system comprising a buck circuit and a buck circuit control device as described above, wherein the buck circuit control device is in signal connection with the main switching element and the auxiliary switching element in the buck circuit. With the buck circuit control system of the present application, a larger proportion of buck transformation can be achieved by adjusting the duty cycle of the main switching element to control the output voltage.

The foregoing is merely an illustrative embodiment of the disclosure and is not intended to limit the scope of the disclosure. Any equivalent changes and modifications made by those skilled in the art without departing from the concepts and principles of the present disclosure shall fall within the scope of the present disclosure.

**Claims**

1. A buck circuit, wherein the buck circuit comprises: a main switching element and an inductor that are connected at a voltage input end and a voltage output end, wherein resonant elements are disposed in series between the main switching element and the inductor, the resonant elements and the inductor are further provided with auxiliary switching elements in parallel, the inductor is provided in parallel with a switching tube, one end of the switching tube is grounded, and the other end of the switching tube is connected between the resonant element and the inductor, the switch tube may be a diode or a power tube used as a synchronous rectification function, wherein an on-off state of the auxiliary switching element is opposite to that of the main switching element.

2. The buck circuit according to claim 1, wherein, the resonant element consists of at least one resonant capacitor and at least one resonant inductor connected in series.

3. The buck circuit according to claim 1, **characterized in that**, the voltage output end is provided in parallel with a constant voltage load.

4. The buck circuit according to claim 1, wherein, the main switching element and the auxiliary switching element are semiconductor power tubes, a source electrode of the main switching element is connected to a drain electrode of the auxiliary switching element, a drain electrode of the main switching element is connected to the voltage input end, and a source electrode of the auxiliary switching element is connected to the voltage output end.

5. The buck circuit according to claim 4, wherein, the semiconductor power tube is any of a metal oxide semiconductor field effect transistor of silicon, a metal oxide semiconductor field effect transistor of silicon carbide, or a gallium nitride power device.

6. A buck circuit control method, applied to the buck circuit according to any of claims 1 to 5, wherein, the method comprises:

   controlling, at a first time, a main switching element to be in an on state and an auxiliary switching element to be in an off state, so that the main switching element is turned on at zero voltage;
   controlling, at a second time, the auxiliary switching element to be in an on state and the main switching element to be in an off state, so that a resonant capacitor and a resonant inductor in a resonant element generate resonance.

7. The buck circuit control method according to claim 6, wherein, prior to the controlling, at a second time, the auxiliary switching element to be in an on state and the main switching element to be in an off state, the method comprises: controlling the main switching element and the auxiliary switching element to be both in an off state such that circuit current flowing through the inductor discharges an output capacitor of the auxiliary switching element until a body diode of the auxiliary switching element is turned on and the auxiliary switching element is enabled meet the condition of being turned on at zero voltage.

8. The buck circuit control method according to claim 6, wherein, posterior to the controlling, at a second time, the auxiliary switching element to be in an on state and the main switching element to be in an off state, the method comprises: controlling the main switching element and the auxiliary switching element to be both in an off state such that the circuit current flowing through the inductor discharges an output capacitor of the main switching element until a body diode of the main switching element is turned on and the main switching element is enabled meet the condition of being turned on at zero voltage.

9. A buck circuit control device, applied to a buck circuit according to any of claims 1 to 5, wherein, the buck circuit control device comprises:

   a first switch control module for controlling, at a first time, a main switching element to be in an on state and an auxiliary switching element to be in an off state, so that the main switching element is turned on at zero voltage;
   a second switch control module for controlling, at a second time, the auxiliary switching element to be in an on state and the main switching element to be in an off state, so that a resonant capacitor and a resonant inductor in a resonant element generate resonance.

10. A buck circuit control system, wherein the buck circuit control system comprises a buck circuit according to any of claims 1 to 5 and a buck circuit control device according to claim 9, wherein the buck circuit control device is in signal connection with the main switching element and the auxiliary switching element in the buck circuit.

FIG.1

FIG.2

9

FIG. 3

Q2 Drv
Q2 Vds
Q2_Id
Q1 Drv

Q1 ZVS condition is lost, hard switching

Q1Vds
Q1_Id
ILm
ILr
IDr
Io+ICout

t0      t1  t2           t3  t4

FIG. 4

10                              20

first switch control module    second switch control module

FIG. 5

## INTERNATIONAL SEARCH REPORT

| International application No. |
|---|
| **PCT/CN2023/107497** |

### A. CLASSIFICATION OF SUBJECT MATTER

H02M3/158(2006.01)i

According to International Patent Classification (IPC) or to both national classification and IPC

### B. FIELDS SEARCHED

Minimum documentation searched (classification system followed by classification symbols)

H02M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 降压, 谐振, 辅助, buck, resonant, auxiliary

### C. DOCUMENTS CONSIDERED TO BE RELEVANT

| Category* | Citation of document, with indication, where appropriate, of the relevant passages | Relevant to claim No. |
|---|---|---|
| PX | CN 116207987 A (SHANGHAI ANSHIBO ENERGY TECHNOLOGY CO., LTD.) 02 June 2023 (2023-06-02) claims 1-10 | 1-10 |
| X | CN 1578087 A (USHIO ELECTRIC INC.) 09 February 2005 (2005-02-09) description, page 15, paragraph 3 and page 18, paragraphs 1-2, and figure 6 | 1-10 |
| A | US 2021/0384833 A1 (APPLE INC.) 09 December 2021 (2021-12-09) entire document | 1-10 |
| A | US 6525513 B1 (EMERSON NETWORK POWER CO., LTD.) 25 February 2003 (2003-02-25) entire document | 1-10 |
| A | CN 104578773 A (XI'AN UNIVERSITY OF TECHNOLOGY) 29 April 2015 (2015-04-29) entire document | 1-10 |
| A | CN 205039692 U (ZHANG HENGXIONG) 17 February 2016 (2016-02-17) entire document | 1-10 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **07 October 2023** | **11 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/107497**

| Patent document cited in search report | | | Publication date (day/month/year) | Patent family member(s) | | | Publication date (day/month/year) |
|---|---|---|---|---|---|---|---|
| CN | 116207987 | A | 02 June 2023 | None | | | |
| CN | 1578087 | A | 09 February 2005 | JP | 2005039877 | A | 10 February 2005 |
| | | | | US | 2005012473 | A1 | 20 January 2005 |
| US | 2021/0384833 | A1 | 09 December 2021 | None | | | |
| US | 6525513 | B1 | 25 February 2003 | AU | 2407599 | A | 16 November 1999 |
| | | | | WO | 9956384 | A1 | 04 November 1999 |
| | | | | RU | 2195067 | C2 | 20 December 2002 |
| | | | | BR | 9906397 | A | 26 September 2000 |
| | | | | CN | 1209682 | A | 03 March 1999 |
| CN | 104578773 | A | 29 April 2015 | None | | | |
| CN | 205039692 | U | 17 February 2016 | None | | | |

Form PCT/ISA/210 (patent family annex) (July 2022)